# EUROPÄISCHE PATENTSCHRIFT

(11) **EP 0 876 750 B1**
(45) Veröffentlichungstag und Bekanntmachung des Hinweises auf die Patenterteilung: **20.02.2002**
(21) Anmeldenummer: 98107347.1
(22) Anmeldetag: 22.04.1998
(51) Int. Cl.: A01D 34/73

(54) **Fadenschneider**
Filament trimmer
Tondeuse à filament

(30) Priorität: 07.05.1997 DE 19719489
(43) Veröffentlichungstag der Anmeldung: 11.11.1998
(73) Patentinhaber: Wolf-Garten GmbH & Co. KG, 57518 Betzdorf (DE)
(72) Erfinder: Held, Peter, 57584 Scheuerfeld (DE); Spies, Walther, Dr., 57080 Siegen (DE)
(74) Vertreter: Koch, Günther, Dipl.-Ing.

(56) Entgegenhaltungen:
- DE-A- 3 029 056
- DE-A- 4 100 611
- FR-A- 2 646 987
- US-A- 3 911 652
- US-A- 4 107 901

## Beschreibung

Die Erfindung bezieht sich auf einen Fadenschneider mit einer Fadenspule, die den Schneidfaden trägt, der radial aus einem rotierenden Schneidkopf vorsteht und nach einer durch Abnutzung verursachten Verkürzung in der Länge nachgestellt wird.

Derartige Fadenschneider werden in großem Umfange als Rasentrimmer zum Schneiden von Grasflächen benutzt, die für den Rasenmäher nicht oder nicht einfach zugänglich sind. Insbesondere werden mit diesen Fadenschneidern Rasenkanten geschnitten.

Da sich der Schneidfaden im Gebrauch abnutzt und insbesondere beim Auftreffen auf harte Gegenstände wie Steine u. dgl. verkürzt, müssen Vorkehrungen getroffen sein, um das verschlissene Fadenende zu ersetzen. Zu diesem Zweck kann nach Entriegelung der Fadenspule der Faden manuell herausgezogen werden, oder die Ergänzung der Fadenlänge erfolgt automatisch, beispielsweise in Abhängigkeit von der Ein- oder Ausschaltung des Antriebsmotors.

Die DE 39 16 525 A1 beschreibt einen Fadenschneider mit automatischer Fadennachstellung, bei dem die drehbar im Gehäuse befindliche Vorratsspule für den Schneidfaden mit einer Sperrvorrichtung versehen ist, die einen im Gehäuse schwenkbar gelagerten Sperrhebel mit einem Schaltarm aufweist, der mit über den Umfang der Spule vorgesehenen Schaltanschlägen einer Schaltscheibe derart zusammenwirkt, daß bei verschlissenem Schneidfaden der Sperrhebel aus seiner Sperrstellung gegenüber den Schaltanschlägen der Spule in eine äußere Stellung übergeht, in welcher die Sperrung der Aufwickelspule aufgehoben ist, so daß sich die Spule gegenüber dem Gehäuse drehen kann und dabei den aufgewickelten Faden um ein vorgegebenes Maß freigibt.

Um die Länge des Schneidfadens zu begrenzen, ist das Fadenschneidergehäuse im allgemeinen mit einer Messerklinge ausgerüstet, die bei der Rotation des Fadens diesen auf eine vorbestimmte Länge kürzt.

Sowohl bei manuell nachstellbaren Schneidfäden als auch bei automatischer Nachstellung besteht das Problem, daß im Zuge der Bearbeitung der Schneidfadenvorrat plötzlich unerwartet zu Ende geht, so daß die Arbeit unterbrochen werden muß, wenn nicht gleich eine neue Schneidfadenspule zur Verfügung steht.

Der Erfindung liegt die Aufgabe zugrunde, den Fadenschneider derart auszugestalten, daß der zur Neige gehende Fadenvorrat dem Benutzer erkennbar wird.

Gelöst wird die gestellte Aufgabe bei einem gattungsgemäßen Fadenschneider durch die im Kennzeichnungsteil des Patentanspruchs 1 bzw. des Patentanspruchs 10 angegebenen Merkmale. In den Unteransprüchen sind besonders vorteilhafte Ausführungsformen des Fadenschneiders angegeben.

Die Sensorvorrichtung kann dabei derart ausgebildet sein, daß auf einem Display oder auf andere Weise optisch oder akustisch der jeweils noch zur Verfügung stehende Fadenlängenvorrat kontinuierlich angezeigt wird. Im allgemeinen wird es jedoch als ausreichend angesehen und ist aus Gründen der Einfachheit zu bevorzugen, die Sensorvorrichtung so auszubilden, daß eine visuelle oder akustische Anzeige geliefert wird, sobald nur noch ein vorbestimmter Restlängenvorrat zur Verfügung steht. Diese "Reserve"-Fadenlänge kann auf einfachste Weise, beispielsweise durch unterschiedliche Einfärbung des Restlängen-Endabschnitts des Schneidfadens, erreicht werden.

Es ist zwar auf anderen technischen Gebieten bekannt, eine Restmenge laufender Bahnen oder Bänder dadurch zu kennzeichnen, daß die Restmenge mit einer Farbkennzeichnung oder einem gedruckten Hinweis gekennzeichnet wird. Verdienst der Erfindung ist es jedoch, das Bedürfnis nach einer solchen Restlängen-Erkenntnis auf dem speziellen Gebiet der Fadenschneider erkannt und in befriedigender Weise einfach und betriebssicher gelöst zu haben. Durch die Erfindung wird gewährleistet, daß der Benutzer rechtzeitig darauf aufmerksam gemacht wird, daß er wenigstens für den nächsten Schneidvorgang eine Ersatzfadenspule zur Verfügung haben muß.

Außer einer farblichen Kodierung, oder zusätzlich hierzu, kommt auch noch eine Änderung in der Beschaffenheit der Fadenoberfläche in Betracht. Beispielsweise kann sich die Querschnittsgestalt des Fadens nach dem Ende hin kontinuierlich oder stufenweise ändern, oder es können auf der Oberfläche in unterschiedlichen Richtungen verlaufende Riffelungen oder andere Oberflächen-Formgestaltungen vorgesehen werden In jedem Fall wird gewährleistet, daß eine definierte Fadenlänge als "Reserve" für den Benutzer erkennbar wird.

Eine weitere Möglichkeit der Restmengenerkennung besteht darin, daß eine Fadenrestlänge zusätzlich geklemmt wird, und erst durch Beseitigung der Klemmung weitergearbeitet werden kann. Weiter ist eine mechanische Resterkennung möglich, wobei eine mechanische Vorrichtung eine entsprechende Restlänge erkennt und optisch auf einem Display oder akustisch anzeigt. Schließlich ist die Anwendung einer elektronischen Vorrichtung denkbar, die eine entsprechende Restlänge erkennt.

Eine derartige mechanische und/oder mechanisch/optisch/ elektronische Anzeigevorrichtung hat gegenüber einer Restfadenkodierung den Vorteil, daß eine Beobachtung des Fadens selbst überflüssig wird und auch während eines kontinuierlich fortgesetzten Schnittvorganges eine deutlich erkennbare Anzeige einer kritischen Restfadenlänge möglich wird.

Realisierbar ist eine solche Vorrichtung auf einfachste Weise dadurch, daß als Sensor ein Fühlhebel den Wickeldurchmesser des noch auf der Spule befindlichen Fadenwickels abtastet und bei Erreichen eines vorbestimmten minimalen Wickeldurchmessers ein Signal auslöst.

Nachstehend wird ein Ausführungsbeispiel der Erfindung anhand der Zeichnung beschrieben. In der Zeichnung zeigen:

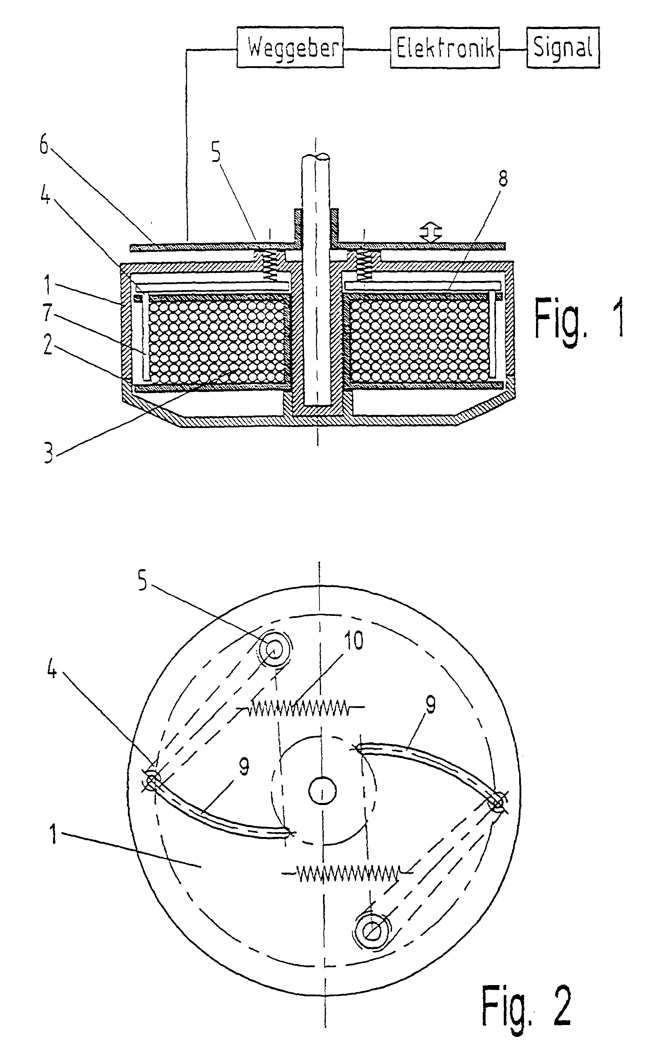

Fig. 1 einen Vertikalschnitt einer in einer Fadenkassette befindlichen Fadenspule mit Fühlhebel;
Fig. 2 eine Axialansicht der in Fig. 1 dargestellten Fadenkassette.

In einer Fadenkassette 1 ist eine Fadenspule 2 drehbar gelagert, und diese Fadenspule trägt das Wickelpaket 3 des Schneidfadens. Der Schneidfaden steht radial durch eine Öffnung der Fadenkassette vor, die motorisch durch die sie tragende Welle gedreht wird. Die Fadenkassette weist in ihrem Deckel zwei Zapfenlager 5 in der Nähe des äußeren Umfangs auf und an den hier gelagerten Zapfen ist das eine Ende eines Übertragungshebels 4 befestigt, dessen anderes Ende einen Fühlstift 7 trägt, der sich über die Höhe des Wickelpaketes 3 erstreckt. Der obere Flansch 8 der Fadenspule 2 weist zwei kreisbogenförmige Schlitze 9 auf, die konzentrisch zum Lagerzapfen 5 verlaufen und in denen der Fühlstift 7 laufen kann. Durch eine am Übertragungshebel 4 angreifende Zugfeder 10 wird der Übertragungshebel 4 nach innen gezogen und der Fühlstift 7 liegt ständig den äußeren Windungen des Wickelpaketes 3 an. In der Lagerstelle 5 des Übertragungshebels 4 in der Fadenkassette wird mittels einer Gewindespindel die Schwenkbewegung des Fühlerstiftes 7 und des Übertragungshebels 4 in einer Axialbewegung des Lagerzapfens umgewandelt, und diese Axialbewegung hebt eine auf der Antriebswelle sitzende Weggeberscheibe 6 aus, deren Höhenlage ein Maß für die zur Verfügung stehende Fadenlänge ist.

Diese Höhenlage kann entweder durch ein Gehäusefenster direkt oder indirekt abgelesen werden. Nach einer zweckmäßigen Ausgestaltung erfolgt jedoch die Auswertung über einen üblichen Weggeber und eine Elektronik, die ein optisches oder akustisches Signal auslöst, wenn ein vorbestimmter Wickeldurchmesser erreicht ist.

## Patentansprüche

1. Fadenschneider mit einer Fadenspule (2), die den Schneidfaden trägt, der radial aus einem rotierenden Schneidkopf vorsteht und nach einer durch Abnutzung verursachten Verkürzung in der Länge nachgestellt wird,
**dadurch gekennzeichnet, daß** ein auf der Fadenspule (2) zur Verfügung stehender Fadenlängenvorrat durch eine Sensorvorrichtung (7) erkennbar ist.

2. Fadenschneider nach Anspruch 1,
**dadurch gekennzeichnet, daß** die Sensorvorrichtung (7) das Erreichen eines vorbestimmten Restlängenvorrats angibt.

3. Fadenschneider nach Anspruch 1,
**dadurch gekennzeichnet, daß** die Sensorvorrichtung (7) kontinuierlich oder diskontinuierlich den jeweiligen Längenvorrat angibt.

4. Fadenschneider nach den Ansprüchen 1 bis 3,
**dadurch gekennzeichnet, daß** die Sensorvorrichtung (7) von einem Fühlstift (7) gebildet wird, der den Wickeldurchmesser des Wickelpaketes (3) abtastet.

5. Fadenschneider nach Anspruch 4,
**dadurch gekennzeichnet, daß** der Fühlstift (7) an einem Übertragungshebel (4) sitzt, der in der Fadenkassette (1) schwenkbar gelagert ist, wobei der Fühlstift (7) in einem Bogenschlitz (9) des Fadenspulenflansches (8) beweglich ist.

6. Fadenschneider nach den Ansprüchen 4 und 5,
**dadurch gekennzeichnet, daß** die Lagerstelle (5) des Übertragungshebels (4) eine Gewindespindel aufweist, über die ein Lagerzapfen nach oben ausgefahren wird.

7. Fadenschneider nach Anspruch 6,
**dadurch gekennzeichnet, daß** die im Fadenkassettendeckel gelagerten, axial verschieblichen Lagerbolzen auf eine Weggeberscheibe (6) einwirken, die auf der Antriebswelle des Fadenschneiders gelagert ist.

8. Fadenschneider nach einem der Ansprüche 4 bis 7,
**dadurch gekennzeichnet, daß** mehrere, vorzugsweise zwei, Fühlstifte (7) mit Übertragungshebel (4) und Lagerzapfen (5) vorgesehen sind.

9. Fadenschneider nach einem der Ansprüche 4 bis 8,
**dadurch gekennzeichnet, daß** die radiale Stellung des Fühlstiftes (7) unmittelbar oder mittelbar über die Weggeberscheibe (6) einer Elektronik zugeführt wird, die bei Erreichen einer vorbestimmten Fühlstiftstellung ein optisches und/oder akustisches Signal auslöst.

10. Fadenschneider mit einer Fadenspule (2), die den Schneidfaden trägt, der radial aus einem rotierenden Schneidkopf vorsteht und nach einer durch Abnutzung verursachten Verkürzung in der Länge nachgestellt wird,
**dadurch gekennzeichnet, daß** der Schneidfaden eine längenproportionale Kennzeichnung trägt.

11. Fadenschneider nach Anspruch 10,
**dadurch gekennzeichnet, daß** die Kennzeichnung eine Farbund/oder Formkodierung ist.

12. Fadenschneider nach Anspruch 10,
**dadurch gekennzeichnet, daß** die Kennzeichnung von einer Fadenumhüllung gebildet ist.

13. Fadenschneider nach Anspruch 1 oder 10,
**dadurch gekennzeichnet, daß** eine vorbestimmte Restfadenlänge zusätzlich geklemmt wird und die Reservemenge nach Aufhebung der Klemmung zur Verfügung steht.

14. Fadenschneider nach den Ansprüchen 1 bis 3,
**dadurch gekennzeichnet, daß** mehrere Fäden auf der Spule (2) aufgewickelt sind, wobei ein letzter Faden als Reservefaden dient

## Claims

1. Strimmer having a spool (2) which carries the line, which protrudes radially from a rotating strimming head and the length of which is adjusted after it has been shortened as a result of abrasion,
**characterised in that** a reserve length of line available on the spool (2) can be recognised by a sensor device (7).

2. Strimmer according to claim 1,
**characterised in that** the sensor device (7) indicates when a predetermined remaining length of reserve line has been reached.

3. Strimmer according to claim 1,
**characterised in that** the sensor device (7) indicates the respective reserve length continuously or discontinuously.

4. Strimmer according to claims 1 to 3,
**characterised in that** the sensor device (7) is constituted by a feeler pin (7) which traces the wound diameter of the wound parcel of line (3).

5. Strimmer according to claim 4,
**characterised in that** the feeler pin (7) sits on a transfer lever (4) which is swivel-mounted in the cassette (1) containing the line, the feeler pin (7) being able to move in an arc-shaped slot (9) in the flange (8) of the spool of line.

6. Strimmer according to claims 4 and 5,
**characterised in that** the bearing (5) of the transfer lever (4) has a threaded spindle via which a journal is extended upwards.

7. Strimmer according to claim 6,
**characterised in that** the axially displaceable journals mounted in the lid of the cassette containing the line operate on a displacement sensor disk (6) which is mounted on the drive shaft of the trimmer.

8. Strimmer according to any of claims 4 to 7,
**characterised in that** a plurality of feeler pins (7), preferably two, are provided with the transfer lever (4) and journal (5).

9. Strimmer according to any of claims 4 to 8,
**characterised in that** the radial position of the feeler pin (7) is sent directly or indirectly via the displacement sensor disk (6) to an electronic unit which sets off a visual and/or acoustic signal whenever a predetermined feeler pin position is reached.

10. Strimmer having a spool (2) which carries the line, which protrudes radially from a rotating strimming head and the length of which is adjusted after it has been shortened as a result of abrasion,
**characterised in that** the strimming line bears identification proportional to its length.

11. Strimmer according to claim 10,
**characterised in that** the identification is a colour and/or shape coding.

12. Strimmer according to claim 10,
**characterised in that** the identification is constituted by a sheath around the line.

13. Strimmer according to claim 1 or 10,
**characterised in that** a predetermined length of residual line is additionally jammed and the quantity in reserve becomes available once the jam has been overcome.

14. Strimmer according to claims 1 to 3,
**characterised in that** a plurality of lines are wound on the spool (2), with a last line acting as the reserve line.

## Revendications

1. Tondeuse à fil comprenant une bobine de fil (2), sur laquelle est enroulé le fil de coupe, qui s'avance dans le sens radial hors d'une tête de coupe rotative et dont la longueur est ajustée à la suite d'un raccourcissement du fil dû à l'usure, **caractérisée en ce qu'**une longueur de fil de réserve, disponible sur la bobine de fil (2), peut être détectée par un dispositif de palpation (7).

2. Tondeuse à fil selon la revendication 1, **caractérisée en ce que** le dispositif de palpation (7) indique si une longueur restante de réserve prédéfinie est atteinte.

3. Tondeuse à fil selon la revendication 1, **caractérisée en ce que** le dispositif de palpation (7) indique en continu ou en discontinu la réserve de longueur correspondante.

4. Tondeuse à fil selon l'une des revendications 1 à 3, **caractérisée en ce que** le dispositif de palpation (7) est formé par une tige de détection (7) qui palpe le diamètre d'enroulement du paquet de fil enroulé (3).

5. Tondeuse à fil selon la revendication 4, **caractérisée en ce que** la tige de détection (7) est montée sur un levier de transmission (4), qui est logé de manière à pouvoir pivoter dans une cassette de fil (1), la tige de détection (7) étant mobile dans une fente courbe (9) de la bride (8) de la bobine de fil.

6. Tondeuse à fil selon les revendications 4 et 5, **caractérisée en ce que** le logement (5) du levier de transmission (4) comporte une broche filetée, par laquelle un téton est déplacé pour sortir vers le haut.

7. Tondeuse à fil selon la revendication 6, **caractérisée en ce que** les boulons, logés dans le couvercle de la cassette de fil et mobiles dans le sens axial, agissent sur un disque d'un transmetteur de position (6), qui est logé sur l'arbre moteur de la tondeuse à fil.

8. Tondeuse à fil selon l'une des revendications 4 à 7, **caractérisée en ce qu'**il est prévu plusieurs, de préférence deux tiges de détection (7) avec levier de transmission (4) et des tétons (5).

9. Tondeuse à fil selon l'une quelconque des revendications 4 à 8, **caractérisée en ce que** la position radiale de la tige de détection (7) est signalée directement ou indirectement par l'intermédiaire du disque du transmetteur de position (6) à une unité électronique, qui émet un signal optique et/ou acoustique lorsque la tige de détection a atteint une position prédéterminée.

10. Tondeuse à fil comprenant une bobine de fil (2), sur laquelle est enroulé le fil de coupe, qui s'avance dans le sens radial hors d'une tête de coupe rotative et dont la longueur est ajustée à la suite d'un raccourcissement du fil dû à l'usure, **caractérisée en ce que** le fil de coupe porte une identification proportionnelle à la longueur.

11. Tondeuse à fil selon la revendication 10, **caractérisée en ce que** l'identification est un codage par couleur et/ou un codage de la forme.

12. Tondeuse à fil selon la revendication 10, **caractérisée en ce que** l'identification est formée par une gaine du fil.

13. Tondeuse à fil selon la revendication 1 ou 10, **caractérisée en ce qu'**il est prévu en plus un blocage d'une longueur de fil de réserve prédéfinie et la quantité de réserve devient disponible à la suite d'un déblocage.

14. Tondeuse à fil selon les revendications 1 à 3, **caractérisée en ce que** plusieurs fils sont enroulés sur la bobine (2), un dernier fil étant utilisé comme fil de réserve.
